# EUROPÄISCHE PATENTANMELDUNG

(11) **EP 2 492 595 A1**
(43) Veröffentlichungstag der Anmeldung: **29.08.2012**
(21) Anmeldenummer: 12156722.6
(22) Anmeldetag: 23.02.2012
(51) Int. Cl.: F23Q 7/04, A47J 37/07

(54) **Vorrichtung zum Anzünden von Grillkohle mit Ventilationssystem**

(30) Priorität: 27.02.2011 CH 3342011
(71) Anmelder: De Jager, Godert, 8055 Zürich (CH)
(72) Erfinder: De Jager, Godert, 8055 Zürich (CH)
(74) Vertreter: Liebetanz, Michael

(57) **Zusammenfassung**

Die Erfindung betrifft eine Vorrichtung für das Aufheizen von Grillkohle, die einen für die Aufnahme von Grillkohle vorgesehenen Heizbehälter (10) mit einer in dem Heizbehälter (10) angebrachten elektrischen Heizspule (1), mit einem Bodengitter (110) und einem Luftventilationssystem (20, 30, 40) umfasst. Dabei ist ein Luftstrom durch den Heizbehälter (10) erzeugbar, wobei die Luft von unten durch das Bodengitter (110) durch den Heizbehälter (10) blasbar ist. Das Luftventilationssystem (20, 30, 40) verfügt über einen externen Ventilationsblock (30), um Luft durch eine Lufteinströmöffnung (60) anzusaugen und über eine erste Öffnung (70) in einen Hohlraum (40) unterhalb des Bodengitters (110) abzugeben. Zum anderen Luft wird Luft durch eine zweite Öffnung (80) im Ventilationsblock (30) in einen aufsteigenden Kanal (20) abgegeben, die an den Heizspulenenden (50, 51) vorbeiströmt, wobei die Kühlungsluft am oberen Ende des Kanals (20) durch eine Luftausströmöffnung (100) wieder austritt.

## Beschreibung

### TECHNISCHES GEBIET

Die vorliegende Erfindung betrifft eine Vorrichtung zum Anzünden von Grillkohle mit integriertem Ventilationssystem umfassend einen für die Aufnahme von Grillkohle vorgesehenen Heizbehälter mit einer in dem Heizbehälter angebrachten elektrischen Heizspule, mit einem Bodengitter und einem Luftventilationssystem, mit dem ein Luftstrom durch den Heizbehälter erzeugbar ist, wobei die Luft von unten durch das Bodengitter durch den Heizbehälter blasbar ist, gemäss dem Oberbegriff des Patentanspruchs 1.

### STAND DER TECHNIK

Um Holzkohlengrills anzuzünden, werden sogenannte Anzündkamine benützt. Anzündkamine sind oben und unten offenen Stahlröhre. Mit einem Anzündkamin erreicht man einen gleichmäßigen Grillglut. Dazu schüttet man die Grillkohlen oder Grillbriketts (Holzkohlebriketts) in den Anzündkamin und stellt den Anzündkamin auf einen feuerfesten ebenen Rost. Dann legt man unter den Anzündkamin einige Anzündwürfel oder etwas Papier und zündet diese an. Durch die Kaminwirkung werden die Grillbriketts sehr schnell durchgeglüht. Die fertig durchgeglühten Grillkohlen, Grillbriketts (Holzkohlebriketts) können anschliessend in den Griller geschüttet werden. Die Menge an Papier oder Zündwürfel reicht oft aber nicht aus, um die Holzkohle im Grillkamin ausreichend in Glut zu versetzen. Unter Umstände müssen mehr Anzündwürfel unter dem schon glühenden Anzündkamin gelegt werden, was zu Verbrennungen an den Händen führen kann, wenn man nicht sehr vorsichtig vorgeht.

Set längerem werden daher Vorheizgeräte verwendet, um Grillkohle in einer schnellen Art und Weise auf eine geeignete Nutzungstemperatur zu bringen. Dabei wird die Grillkohle in einer an sich bekannten Art und Weise in einen Behälter geschüttet und durch ein Anzündelement entzündet. Dabei ist für die Entfachung der Glut von Vorteil, wenn die Glut durch einen steten Luftstrom weiter angefacht wird. Die Grillkohle kann dadurch schnell und einfach auf Betriebstemperatur gebracht werden.

In US 3,209,712 ist eine Vorrichtung zum Anzünden von Grillkohle offenbart, wobei Grillkohle anhand von Grillanzündem in einem Metallgehäuse entzündet wird und durch einen Ventilator innerhalb des Gehäuses zusätzlich entfacht wird. Die Grillkohle liegt dabei auf einem Rost, durch welchen Luft von unten her hindurch geblasen wird. Dabei wird der Ventilator durch ein Schutzblech vor der Hitze der Grillkohle abgeschirmt.

Eine Vorrichtung zum Anzünden von Grillkohle mit den Merkmalen des Oberbegriffs des Anspruchs 1 ist aus der US 3,060, 868 bekannt.

Bei dieser wie bei den weiteren Dokumenten US 3,529,557 und US 3,339,505 umfassen Vorrichtungen zum Erhitzen von Grillkohle einen Metallzylinder, in denen Grillkohle auf einer horizontalen Heizspule aufliegt, durch die von unten Luft gelangt bzw. durch ein Ventilationssystem geblasen wird. Die Elektronik der Heizspule ist dabei auf Höhe der Ventilationseinblasöffnung ausserhalb des Metallzylinders angebracht.

US 3,159,119 stellt eine Vorrichtung zum Anzünden von Grillkohle dar, wobei Grillkohle in einen an der unteren Seitenwand perforierten, metallenen Grillkohletopf gefüllt wird. Zum Anzünden der Grillkohle wird dieser Grillkohletopf in einen metallenen Grillkohlecontainer gestellt, in dem brennbares Material zum Anzünden der Grillkohle gelegt wird. Ein Ventilator unterhalb des Bodens des Grillkohlecontainers befördert dabei Luft durch die an den Seiten perforierten Grillkohlecontainer als auch durch den mit Grillkohle befüllten Metalltopf.

In ähnlicher Art und Weise stellen US 3,191,556 und FR 2860 965 Vorrichtungen dar, bei denen Grillkohle auf einer perforierten Bodenplatte eines Grillkohletopfes durch brennbares Material entzündet wird und mit einem unterhalb der Bodenplatte liegenden Ventilator weiterhin angefacht wird.

In US 3,413,935 wird eine Vorrichtung zum Anzünden von Grillkohle beschrieben, wobei Grillkohle innerhalb eines perforierten Metallzylinders anhand einer in die Grillkohle hineinragenden, elektrischen Glühspule angezündet wird. Dabei gelangt Luft durch Löcher im Metallzylinder zur glühenden Grillkohle, die die Grillkohle weiterhin anfacht.

US 5,197,455 zeigt ebenfalls eine Vorrichtung zum Erhitzen von Grillkohle, bei der die Grillkohle auf ein konisch geformtes Gitter innerhalb eines Metalltopfes geschüttet wird. Die Form des Gitters erlaubt, dass die unterhalb des Gitters erzeugte Hitze besser auf die Grillkohle verteilt wird. Ebenso zeigt die Vorrichtung eine konisch geformte Heizspule anstelle eines Gitters, bei der jedoch die Elektronik nicht durch eine besonders geschützte Hitzevorrichtung äusserlich an der Topfwand angebracht ist.

Die US 3,590,755 zeigt einen zentral anbrachten Heizstab, der durch die Bodenplatte eines Metalltopfes vertikal nach oben absteht. Die Elektronik des Heizstabes ist unterhalb der Bodenplatte angebracht, wobei keine Ventilationsvorrichtung offenbart ist.

### DARSTELLUNG DER ERFINDUNG

Es ist eine Aufgabe der vorliegenden Erfindung, eine Vorrichtung zum Aufheizen von Grillkohle anzugeben, mit der diese mit elektrischer Energie auf möglichst einfache, schnelle und für den Benutzer und die Vorrichtung sichere Art und Weise angezündet werden kann. Aufgabe der vorliegenden Erfindung ist es auch, einen Grillkamin dahingehend weiterzuentwickeln, dass die Energiezufuhr genau bis zum Erreichen der benötigten Glut dosiert werden kann.

Diese Aufgabe wird durch eine Vorrichtung mit den Merkmalen des Anspruchs 1 gelöst, wobei das Luftventilationssystem über einen externen Ventilationsblock verfügt, um Luft durch eine Lufteinströmöffnung anzusaugen und über eine erste Öffnung in einen Hohlraum unterhalb des Bodengitters abzugeben, und um zum anderen Luft durch eine zweite Öffnung im Ventilationsblock in einen aufsteigenden Kanal abzugeben, die an den Heizspulenenden vorbeiströmt, wobei die Kühlungsluft am oberen Ende des Kanals durch eine Luftausströmöffnung wieder austritt.

Die vorliegende Erfindung stellt also eine Grillkohleanzündvorrichtung zur Verfügung, welche einen Heizbehälter aufweist, bestehend aus einem hitzebeständigen Material mit einer im Innern vertikal angebrachten Heizspule und einem Ventilationsblock. Der Heizbehälter kann in einer quaderförmigen oder zylinderförmigen Ausführungsform vorliegen und ist dafür vorgesehen, die Grillkohle aufzunehmen; er ist nach unten durch ein Gitter gegenüber einem Kanal des Ventilationsblocks abgetrennt. Den unter dem Gitter liegenden Bereich gehört üblicherweise zum einstückigen Behältergehäuse aber nicht zum Heizbehälter an sich. Der Ventilationsblock stellt das Unterteil des Handgriffes dar, wobei der Ventilationsblock die Aufgabe hat, einerseits die Grillkohle zu belüften, und andererseits die Elektronik und die Heizspulenenden im aufsteigenden Handgriff zu kühlen. Die Heizspule ist dabei an der seitlichen Innenwand des Heizbehälters angebracht und ragt im gleichen Abstand zu den Seitenwänden in den Heizbehälter hinein. Die Heizspule kann beliebig viele Windungen aufweisen und erstreckt sich vorteilhafterweise in der vertikalen Medianebene, sodass dadurch die aufgeschüttete Grillkohle im gesamten Heizbehälter vorteilhaft gleichmässig aufgeheizt wird.

Die eingefüllte Grillkohle innerhalb des Heizbehälters liegt dabei bevorzugt auf einem Gitter auf, durch welches Luft zum Anfachen der Kohle hindurchgeleitet werden kann. Der im unteren Teil des Handgriffes angebrachte Ventilationsblock befördert dabei Luft zum einen in den Hohlraum unterhalb des Gitters, zum anderen in den aufsteigenden Kanal des Handgriffs, in dem die Elektronik für die Heizspule untergebracht ist. So kann in einfacher Weise sichergestellt werden, dass die Elektronik permanent gekühlt und vor Überhitzung geschützt wird. Des Weiteren weist das Bodengitter vorteilhafterweise eine Vollfläche an der Seite auf, an der das Bodengitter an die Öffnung zum Ventilationsblock grenzt, um den Ventilationsblock vor Hitzeschäden zu schützen.

Der Heizbehälter ist aus einem hitzebeständigen Material gefertigt, welches bei mindestens 300 oder besser 400, 500 Grad Celsius verformungsfrei verbleibt.

Die Heizspule ist in Mäanderform in der Medianebene des Heizbehälters im gleichen Abstand zu den Aussenwänden angebracht und kann beispielsweise in der Seitenansicht die Form eines doppelwandigen U's aufweisen.

Die die Leistung für die Heizspule regelnde Elektronik des Geräts kann im aufsteigenden Kanal zur Kühlung der Heizspulenenden untergebracht sein oder im Fussbereich in der Nähe des Ventilationsblockes, insbesondere wenn der Ventilationsblock das Unterteil eines Handgriffes darstellt. Vorteilhafterweise ist der aufsteigende Kanal an der Aussenwand des Heizbehälters angeordnet und endet im Oberteil des Handgriffes.

Wenn das Bodengitter eine Vollfläche an der Seite aufweist, an der das Bodengitter an die Öffnung zum Ventilationsblock grenzt, kann die Wärmestrahlung vor einer Reflektion in den zum Ventilationsblock führenden Kanal abgehalten werden.

Kurz gesagt, liefert die Erfindung eine Anzündvorrichtung zum Anzünden von Holzkohlebriketts oder Holzkohle, die dadurch gekennzeichnet ist, dass sich innerhalb eines Rohrabschnitts, in welchen Holzkohlebriketts oder Holzkohle einfüllbar ist, ein Elektroheizelement befindet. Dabei ist bevorzugt die Unterseite des Rohrabschnitts, in welchen Holzkohlebriketts oder Holzkohle einfüllbar ist, durch ein Gitter oder Lochblech abgeschlossen. Es kann an diesem Rohrabschnitt ein Temperaturschalter angebracht sein, insbesondere ein Bimetallschalter. Schliesslich kann am Rohrabschnitt ein Gebläse angebracht sein.

Weitere Ausführungsformen sind in den abhängigen Ansprüchen angegeben.

Der Vorteil der Erfindung besteht darin, dass mit einen Elektroheizspirale der Energiezufuhr genau reguliert werden kann. Erst wenn die richtige Glut erreicht ist, wird die Stromzufuhr unterbrochen. Zum Unterbrechen der Stromzufuhr kann ein Bimetallschalter an der Rohrwand befestigt werden, welche die Stromzufuhr beispielsweise beim Erreichen einer Wandtemperatur von 150 °C abschaltet.

Um das Anzünden zu beschleunigen, kann aussen an der Rohrwand ein Elektrogebläse angebracht werden, welches Luft unten in das Rohr einbläst. Das Elektrogebläse kann ebenfalls über den Bimetetallschalter geschaltet werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische geschnittene Seitenansicht eines Grillkohleanzündgerätes gemäss einem ersten Ausführungsbeispiel der Erfindung;
- Fig. 2: eine schematische geschnittene Seitenansicht eines Grillkohleanzündgerätes gemäss einem zweiten Ausführungsbeispiel der Erfindung;
- Fig. 3: eine perspektivische Ansicht eines Grillkohleanzündgerätes gemäss Fig. 2; und.
- Fig. 4: eine schematische teilweise geschnittene perspektivische Ansicht eines Grillkohleanzündgerätes gemäss einem dritten Ausführungsbeispiel der Erfindung.

### BESCHREIBUNG EINER BEVORZUGTEN AUSFÜHRUNGSFORM

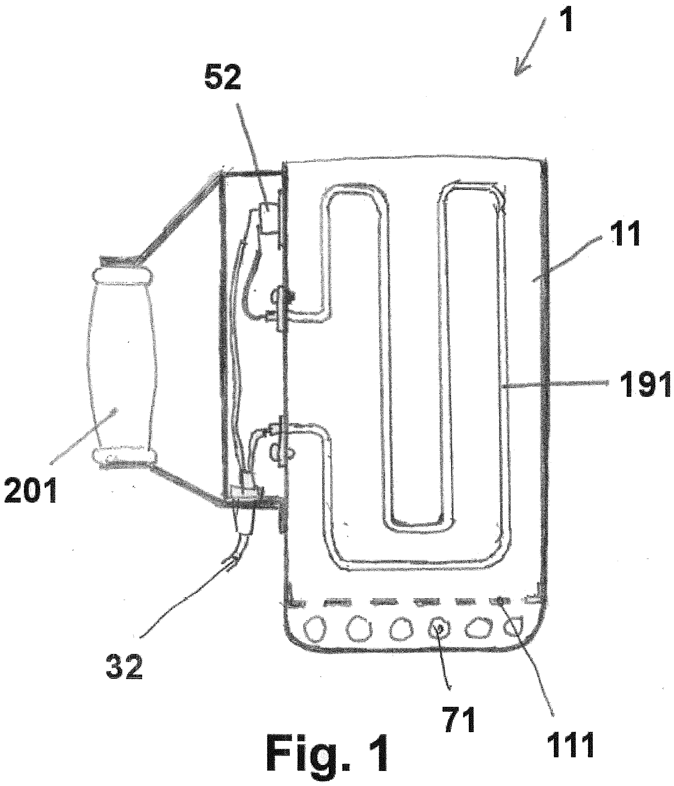

Die Fig. 1 zeigt eine schematische geschnittene Seitenansicht eines Grillkohleanzündgerätes gemäss einem ersten Ausführungsbeispiel der Erfindung. Dabei zeigt die Fig.1 eine Anzündvorrichtung 1 mit einer Elektroheizspirale 191. Das unten abgeschlossene rohrförmige Blechgehäuse 11 ist im unteren Bereich mit einem Gitter oder einer Lochblech 111 versehen. Im unteren Bereich des Gehäuses sind Belüftungslöcher 71 angebracht. Das Lochblech verhindert, dass die Holzkohle unten am Boden des Gehäuses 11 aufliegt und stellt so eine gute Luftzufuhr sicher. Diese Luftzufuhr ist wichtig für eine gute Kaminwirkung und damit schnelle Glutbildung.

In das unten abgeschlossene rohrförmige Blechgehäuse 11 ist ein Heizelement in Gestalt einer Elektroheizspirale 191 so befestigt, dass eine möglichst grossflächige Berührung mit der eingefüllten Holzkohle stattfindet. Die Stromzufuhr erfolgt über das Anschlusskabel 32.

Es ist von Vorteil, wenn eine Anschlussleitung über einen Bimetalltemperaturschalter 52 geführt wird. Dieser Bimetallschalter 52 bewirkt, dass der Stromzufuhr bei Erreichen einer Wandtemperatur des Gehäuses 11 von beispielsweise 150°C abgestellt wird. Zur einfacheren Handhabung ist ein Handgriff 201 am Gehäuse 11 befestigt. Der Handgriff ist insbesondere aus einem wärmeisolierenden Material gebildet, so dass nicht die durch das heisse Rohr 11 bestehende Wärmeenergie in den Handgriff 201 geleitet werden kann. Wenn die Holzkohle eine genügende Glut erreicht hat, kann die Anzündvorrichtung 1 zum Grill gebracht werden und die glühende Holzkohle in diesen hineingeschüttet werden.

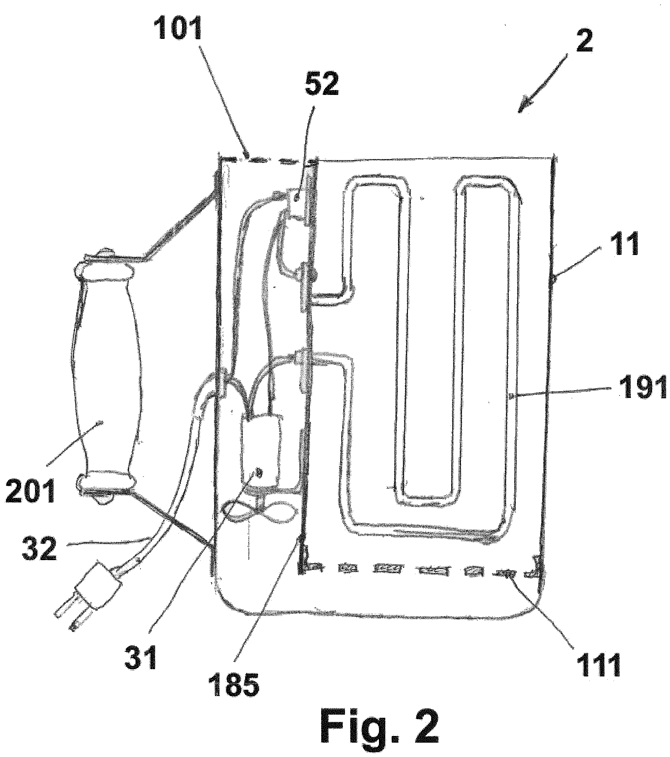

Die Fig. 2 zeigt ein weiteres Ausführungsbeispiel einer Anzündvorrichtung 2 der Erfindung, wobei zur schnelleren Glutbildung ein Elektrogebläse 31 verwendet wird. Das Elektrogebläse 31, die Heizspirale 191 und der Bimetalltemperaturschalter 52 sind bei diesem Ausführungsbeispiel an einer Zwischenwand 12 des Rohrs 11 angebracht. Zum elektrischen Berührungsschutz ist der durch die Zwischenwand 12 gebildete Kanal mit einem Lochblech 101 nach oben abgeschlossen. Die Luft zur Belüftung der Holzkohle wird durch das Lochblech 101 von oben angesaugt und von dem Elektrogebläse 31 durch das Gitter 111 in den Holzkohlebehälter 11 eingeblasen.

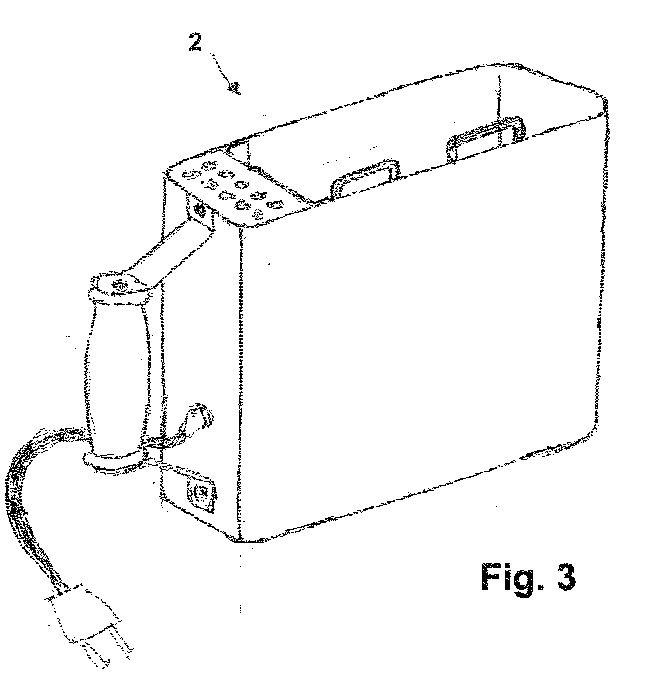

Die Fig. 3 zeigt eine perspektivische Darstellung des Ausführungsbeispiels der Anzündvorrichtung 2 aus Fig. 2.

Gleiche oder ähnliche Merkmale sind in allen Ausführungsbeispielen mit gleichen oder ähnlichen Bezugszeichen, beispielsweise in derselben 10er Gruppe von Bezugszeichen, gekennzeichnet.

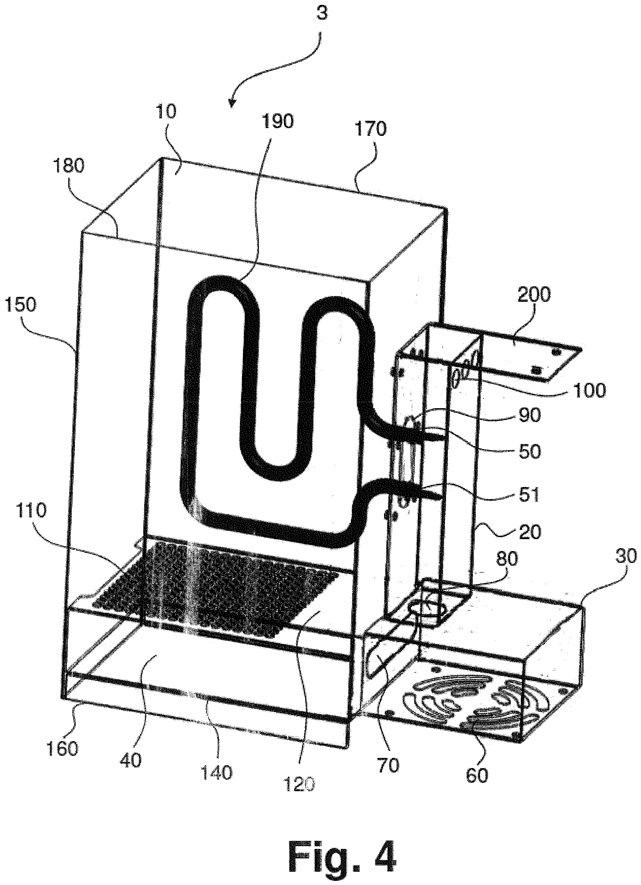

Die Fig. 4 schliesslich zeigt eine weitere bevorzugte Ausführungsform der für das Verständnis der Erfindung wesentlichen Elemente einer erfindungsgemässen Vorrichtung für das Erhitzen von Grillkohle in einer Grillkohleanzündvorrichtung 3 gemäss einem Ausführungsbeispiel.

Ein Heizbehälter 10 bildet in diesem Ausführungsbeispiel die Basis für die Montage von einer Grillkohleanzündvorrichtung 3. Der Heizbehälter 10 ist gemäss dieser Ausführungsform einstückig oder aus einer Ummantelung 150 und einem dazugehörigen Bodenstück 140 aus einem robusten, hitzebeständigen Material, vorzugsweise aus einem Metall, beispielsweise Blech, hergestellt. Der Heizbehälter liegt in dieser Ausführungsform als eckiger Quader vor. Der Heizbehälter 10 ist nach oben offen. Er kann aber auch einen Deckel, insbesondere ein Gitter aufweisen, welches auf die obere Öffnung klappbar ist. Des Weiteren könnte der Heizbehälter 10 anstelle einer quaderförmigen eine zylindrische Form besitzen.

Wie aus der Figur ersichtlich ist, weist der Heizbehälter 10 dieser Ausführungsform an der schmalen Aussenseite einen zwischen den Elementen 200 und 30 vorgesehenen Handgriff auf, der vertikal montiert ist. Der untere Teil des Handgriffs stellt in dieser Ausführungsform einen Ventilatorblock 30 dar, der an der Unterseite eine Lufteinstromöffnung 60 aufweist. In dem Ventilatorblock 30 ist ein Elektrogebläse 31 vorgesehen, welches in Grösse und Leistung den Kühlgebläsen von Netzteilen oder Zusatzgebläsen aus handelsüblichen Desktop-Computern entspricht.

Um der Lufteinstromöffnung 60 genügend Abstand vom Boden zur Verfügung zu stellen, steht der Heizbehälter 10 bevorzugt auf einem Flansch 160, der zwischen 5 und 20 Zentimeter breit ist, in diesem Ausführungsbeispiel zwischen 10 und 15 Zentimeter aufweist. Im Ventilationsblock 30 sind mindestens zwei Öffnungen 70; 80 vorhanden, die den Ventilationsblock 30 zum einen mit dem Heizbehälter 10 und zum anderen mit einem aufsteigenden Kanal 20 verbinden, wobei die Öffnung 70 breiter angelegt ist im Vergleich zu Öffnung 80, insbesondere in der Dimension der Durchtrittsfläche mindestens zweimal, bevorzugter dreimal so gross, so dass eine entsprechende vorbestimmte Luftstromverteilung ergibt. Diese Öffnungen sind im allgemeinen eines oder mehrere Langlöcher in der Wand. Der Kanal 20 bildet einen Teil des (in der Fig. 4 nicht dargestellten) Handgriffs 201, der dem Hitzeschutz der darin befindlichen Elektronik und der Heizspulenenden 50; 51, die an einer Heizspulenhalterung 90 befestigt sind, dient. Am oberen Ende des Kanals 20 ist in diesem Ausführungsbeispiel eine seitliche Luftausströmöffnung 100 angebracht; diese kann sich jedoch auch an der Oberseite des Kanals 20, wie bei dem Ausführungsbeispiel der Fig. 1 und 2 befinden. Die Luftausströmöffnung 100 besteht im Ausführungsbeispiel aus drei kreisrunden Austrittsöffnungen.

Die Heizspule 190, die mit einer an sich bekannten Heizspulenhalterung 90 an der zum Kanal 20 weisenden Wand des Heizbehälters 10 befestigt ist, kann beliebig viele Windungen aufweisen und ist in einer Medianebene innerhalb des Heizbehälters mit gleichem Abstand zu den Aussenwänden 170; 180 eingebaut. Sie ist somit im allgemeinen Betriebszustand im wesentlichen in einer vertikalen Ebene ausgerichtet, Die Elektroheizspirale besteht beim vorliegenden Ausführungsbeispiel aus geraden senkrechten Abschnitten, im oberen Bereich Halbkreise bildenden Kreissegmenten und eine unten horizontal und unter den gekrümmten Abschnitten angeordnete Spiralenleitung; die hier zusammengeführt in die Zwischenwand 185 eingebracht wird. Wie aus den Fig. 1 bis 3 zu erkennen können die meandrierenden und sich in einem mehrfachen "U" windenden Heizspiralabschnitte auch im wesentlichen gerade Strecken und enge Windungen an den Ecken aufweisen.

Eine Luftöffnung 70 im Ventilationsblock 30, die in Verbindung mit dem Heizbehälter 10 steht, mündet in einen Hohlraum 40 unterhalb des Bodengitters 110, von dem aus die zirkulierende Luft durch das Bodengitter 110 in den Heizbehälter 10 gelangt. Um den Ventilationsblock 30 vor Hitzeschäden zu schützen, weist das Bodengitter 110 vorteilhafterweise eine Vollfläche 120 an der Seite auf, an der das Bodengitter 110 an die Öffnung 70 zum Ventilationsblock 30 grenzt. Die Vollfläche 120 kann zwischen 3 und 10 Zentimeter breit sein, in diesem Ausführungsbeispiel ist diese jedoch ca. 5 Zentimeter breit. Das Bodengitter 110 weist eine Vielzahl von kleinen Öffnungen auf, die sicherstellen, dass keine kleinen Stücke der Grillkohle durch das Gitter 110 hindurchfallen. Mit anderen Worten, die Öffnungen liegen im Durchmesser weit unter der Durchschnittsgrösse der üblichen Holzkohlestücke, die eingesetzt werden. Beispielsweise sind die Öffnungen 2 bis 5 Millimeter im Durchmesser. Gleichzeitig ist die Gesamtgrösse der Durchtrittsfläche aller Öffnungen vorteilhafterweise im Grössenbereich des Querschnitts der Durchtrittsöffnung 70 aus dem Ventilationsblock 30. In der von dem Ventilationsblock 30 wegweisenden Seitenwand des Heizbehälters kann eine Klappe vorgesehen sein, die geöffnet werden kann, um in den Raum 40 gelangte Grillkohle-Partikel einfach zu entfernen.

Der Handgriff wird durch einen zwischen zum Beispiel der Aussenwand des Ventilationsblocks 30 und der oberen Befestigungsplatte 200 vorgesehenen Bogen mit einem Handgriff 201 (hier nicht dargestellt), insbesondere aus Holz vervollständigt.

Die Erfindung ist selbstverständlich nicht auf das vorstehende Ausführungsbeispiel beschränkt, und eine Vielzahl von Abwandlungen sind möglich. So können insbesondere der Heizbehälter 10, das Bodengitter 110, die Heizspule 190, der Ventilatorblock 30 und der Kanal 20 auf beliebige andere Art und Weise entsprechend dem bekannten Stand der Technik ausgestaltet sein. Elektrische Zuleitungen, die insbesondere im unteren Teil des Handgriffs in den Ventilationsblock führen können, sind in der Zeichnung aus Gründen der Übersichtlichkeit nicht dargestellt worden.

### BEZUGSZEICHENLISTE

- 1: Anzündvorrichtung
- 2: Anzündvorrichtung
- 3: Anzündvorrichtung
- 10: Heizbehälter
- 11: Rohr
- 20: Kanal
- 30: Ventilationsblock
- 31: Elektrogebläse
- 32: Anschlusskabel
- 40: Hohlraum
- 50: Heizspulenende 1
- 51: Heizspulenende 2
- 52: Bimetallschalter
- 60: Lufteinströmöffnung
- 70: erste Öffnung
- 71: Belüftungslöcher
- 80: zweite Öffnung

- 90: Heizspulenhalterung
- 100: Luftausströmöffnung
- 101: Lochblech
- 110: Bodengitter
- 111: Lochblech
- 120: Vollfläche
- 140: Bodenstück
- 150: Ummantelung
- 160: Flansch
- 170: Aussenwand 1
- 180: Aussenwand 2
- 185: Zwischenwand
- 190: Heizspule
- 191: Elektroheizspirale
- 200: Befestigungsplatte
- 201: Handgriff

## Patentansprüche

1. Vorrichtung für das Aufheizen von Grillkohle umfassend einen für die Aufnahme von Grillkohle vorgesehenen Heizbehälter (10) mit einer in dem Heizbehälter (10) angebrachten elektrischen Heizspule (1), mit einem Bodengitter (110) und einem Luftventilationssystem (20, 30, 40), mit dem ein Luftstrom durch den Heizbehälter (10) erzeugbar ist, wobei die Luft von unten durch das Bodengitter (110) durch den Heizbehälter (10) blasbar ist, **dadurch gekennzeichnet, dass** das Luftventilationssystem (20, 30, 40) über einen externen Ventilationsblock (30) verfügt, um Luft durch eine Lufteinströmöffnung (60) anzusaugen und über eine erste Öffnung (70) in einen Hohlraum (40) unterhalb des Bodengitters (110) abzugeben, und um zum anderen Luft durch eine zweite Öffnung (80) im Ventilationsblock (30) in einen aufsteigenden Kanal (20) abzugeben, die an den Heizspulenenden (50, 51) vorbeiströmt, wobei die Kühlungsluft am oberen Ende des Kanals (20) durch eine Luftausströmöffnung (100) wieder austritt.

2. Vorrichtung nach Anspruch 1, **dadurch gekennzeichnet, dass** der Heizbehälter (10) aus einem hitzebeständigen Material gefertigt ist.

3. Vorrichtung nach einem der vorhergehenden Ansprüche, **dadurch gekennzeichnet, dass** die Heizspule (1) in der Medianebene des Heizbehälters (10) im gleichen Abstand zu den Aussenwänden angebracht ist.

4. Vorrichtung nach einem der vorhergehenden Ansprüche, **dadurch gekennzeichnet, dass** im Kanal (20) zur Kühlung der Heizspulenenden (50, 51) zudem die Elektronik des Geräts untergebracht ist.

5. Vorrichtung nach einem der vorhergehenden Ansprüche, **dadurch gekennzeichnet, dass** der Ventilationsblock (30) das Unterteil eines Handgriffes darstellt.

6. Vorrichtung nach Anspruch 5, **dadurch gekennzeichnet, dass** der Kanal (20) im Oberteil des Handgriffes endet.

7. Vorrichtung nach einem der vorhergehenden Ansprüche, **dadurch gekennzeichnet, dass** das Bodengitter (110) eine Vollfläche (120) an der Seite aufweist, an der das Bodengitter an die Öffnung zum Ventilationsblock grenzt.
